# FASCICULE DE BREVET EUROPEEN

(11) **EP 3 227 944 B1**
(45) Date de publication et mention de la délivrance du brevet: **02.01.2019**
(21) Numéro de dépôt: 15810690.6
(22) Date de dépôt: 30.11.2015
(51) Int. Cl.: H01M 4/60, H01M 10/052, H01M 10/0565, H01M 10/0568

(54) **BATTERIE LITHIUM ORGANIQUE**
ORGANISCHE LITHIUMBATTERIE
ORGANIC LITHIUM BATTERY

(30) Priorité: 01.12.2014 FR 1461704
(43) Date de publication de la demande: 11.10.2017
(73) Titulaire: Blue Solutions, 29500 Ergué Gabéric (FR); Centre National de la Recherche Scientifique, 75016 Paris (FR); Universite de Nantes, 44000 Nantes (FR)
(72) Inventeur: LECUYER, Margaud, 29760 Penmarc'h (FR); DESCHAMPS, Marc, 29000 Quimper (FR); GAUBICHER, Joël, 44000 Nantes (FR); POIZOT, Philippe, 80000 Amiens (FR); GUYOMARD, Dominique, 44880 Sautron (FR); LESTRIEZ, Bernard, 44000 Nantes (FR)
(74) Mandataire: Goulard, Sophie
(86) Numéro de dépôt international: PCT/FR2015/053265
(87) Numéro de publication internationale: WO 2016/087759

(56) Documents cités:
- EP-A1- 2 546 907
- WO-A1-2014/013938
- US-A1- 2014 272 603
- LIANG Y ET AL: "Organic electrode materials for rechargeable lithium batteries", ADVANCED ENERGY MATERIALS, WILEY - V C H VERLAG GMBH & CO. KGAA, DE, vol. 2, no. 7, 1 juillet 2012 (2012-07-01) , pages 742-769, XP002742883, ISSN: 1614-6832, DOI: 10.1002/AENM.201100795 [extrait le 2012-05-21]
- Www Electrochemsci Org ET AL: "International Journal of ELECTROCHEMICAL SCIENCE-Pentacenetetrone as a High-Capacity Organic Positive- Electrode Material for Use in Rechargeable Lithium Batteries", Int. J. Electrochem. Sci, 7 juillet 2011 (2011-07-07), pages 2905-2911, XP055214944, Extrait de l'Internet: URL:http://www.electrochemsci.org/papers/v ol6/6072905.pdf [extrait le 2015-09-21]
- LÉCUYER MARGAUD ET AL: "A rechargeable lithium/quinone battery using a commercial polymer electrolyte", ELECTROCHEMISTRY COMMUNICATIONS, vol. 55, 19 mars 2015 (2015-03-19), pages 22-25, XP029155752, ISSN: 1388-2481, DOI: 10.1016/J.ELECOM.2015.03.010

## Description

La présente invention se rapporte au domaine des batteries lithium organique de hautes densités d'énergie et de puissance. En particulier, la présente invention concerne une batterie lithium organique comprenant une électrode positive à base de composés organiques rédox et un électrolyte comprenant une concentration élevée en sel de lithium, et son procédé de fabrication.

Les batteries au lithium sont devenues des constituants indispensables dans de nombreux dispositifs qui comprennent des appareils portables, tels que notamment les téléphones mobiles, les ordinateurs et l'outillage léger, ou des appareils plus lourds tels que des moyens de transports à deux roues (bicyclettes, cyclomoteurs) ou à quatre roues (véhicules automobiles électriques ou hybrides). Elles sont également largement étudiées pour une utilisation dans le domaine du stockage stationnaire d'énergie.

Une batterie au lithium métal comprend au moins une électrode négative et au moins une électrode positive entre lesquelles est placé un séparateur imprégné par un électrolyte liquide ou un électrolyte polymère solide assurant par lui-même à la fois la séparation physique des électrodes et le transport des ions lithium. L'électrode négative est constituée d'une feuille de lithium métallique ou d'un alliage de lithium, éventuellement supportée par un collecteur de courant ; et l'électrode positive est constituée par un collecteur de courant supportant un matériau d'électrode contenant au moins une matière active d'électrode positive capable d'insérer des ions lithium de manière réversible, éventuellement un polymère qui joue le rôle de liant (e.g. poly(fluorure de vinylidène) ou PVdF) et/ou éventuellement un agent générant une conductivité électronique (e.g. noir de carbone). L'électrolyte liquide est par exemple constitué d'un sel de lithium (e.g. LiBF₄, LiClO₄, LiPF₆, etc...) en solution dans un solvant choisi pour optimiser le transport et la dissociation des ions. Les solvants d'électrolyte conventionnels (e.g. carbonate de propylène, γ-butyrolactone, sulfolane, diméthoxyéthane, tétrahydrofurane, 1,3-dioxolane, etc...) sont saturés dans des conditions normales à environ 1-1,5 mol/l de sel de lithium. Le séparateur est généralement constitué d'un matériau poreux non conducteur électronique, par exemple d'un matériau polymère à base de polyoléfines (e.g. polyéthylène) ou de fibres (e.g. fibres de verre ou fibres de bois).

Au cours du fonctionnement de la batterie, des ions lithium passent de l'une à l'autre des électrodes à travers l'électrolyte. Lors de la décharge de la batterie, une quantité de lithium réagit avec la matière active d'électrode positive à partir de l'électrolyte, et une quantité équivalente est introduite dans l'électrolyte à partir de la matière active de l'électrode négative, la concentration en lithium restant ainsi constante dans l'électrolyte. L'insertion du lithium dans l'électrode positive est compensée par apport d'électrons à partir de l'électrode négative *via* un circuit extérieur. Lors de la charge, les phénomènes inverses ont lieu.

Les divers constituants d'une batterie au lithium sont choisis de manière à produire, au coût le plus faible possible, des batteries qui ont une densité d'énergie élevée, une bonne stabilité au cyclage et qui fonctionnent avec sécurité.

Pour des raisons historiques mais aussi de performances électrochimiques, les technologies actuellement commercialisées reposent sur l'usage quasi-exclusif de matériaux d'électrode inorganiques, principalement à base des métaux de transition tels que Co, Mn, Ni ou Fe. Toutefois, ces matériaux d'électrode inorganiques (e.g. LiCoO₂, LiMnO₄, LiFePO₄, LiNi_{0,8}Co_{0,15}Al_{0,05}O₂, LiNi_{1/3}Mn_{1/3}Co_{1/3}O₂, LiNi_{0,5}Mn_{1,5}O₄, etc...) présentent de nombreux inconvénients tels que le risque d'explosion de la batterie, leur toxicité élevée, leur difficulté de recyclage, leur coût élevé et/ou leur faible capacité spécifique. En outre, ces matériaux inorganiques sont généralement élaborés à partir de ressources d'origine géologique (i.e. non renouvelables) et énergivores dans leur procédé. Compte tenu des volumes de production de batteries annoncés (plusieurs milliards d'unités par an pour la technologie Li-ion), ces matériaux d'électrode inorganiques risquent de ne plus être disponibles en grande quantité à terme. Par ailleurs, aucune des technologies existantes ne répond parfaitement aux besoins tandis que de nouvelles normes apparaissent au niveau européen sur le plan environnemental (voir http://ec.europa.eu/environment/waste/batteries/, directive 2006/66/EC).

Dans ce contexte, le développement de batteries lithium organique comprenant comme matière active d'électrode positive une structure organique rédox (e.g. dérivés de nitroxydes, composés polyaromatiques), c'est-à-dire une structure organique capable de mettre en oeuvre une ou plusieurs réactions d'oxydoréductions réversibles, notamment en échangeant des électrons avec une électrode et simultanément en s'associant avec des ions lithium, laisse entrevoir certaines potentialités. Tout d'abord, ces structures organiques rédox présentent l'avantage de comprendre des éléments chimiques (C, H, N, O, S, en particulier) pouvant potentiellement dériver de ressources renouvelables, les rendant ainsi plus abondants. Ensuite, elles se détruisent assez facilement par simple combustion à température relativement modérée. En outre, leurs propriétés électrochimiques (propriétés de conduction ionique et électronique, valeur du potentiel d'oxydation, capacité spécifique) peuvent être modulées par une fonctionnalisation adaptée (e.g. intégration de groupements attracteurs proches du centre rédox). Enfin, les structures organiques rédox ont généralement une densité relative de l'ordre de 1 g/cm³, elles sont donc plus légères que les matériaux d'électrode inorganiques, et conduisent par conséquent à des batteries au lithium présentant un poids réduit.

Les études menées sur les batteries lithium organique depuis le début des années 80 ont été exclusivement centrées sur la recherche de nouvelles structures organiques rédox et ont montré que les propriétés fondamentales requises pour qu'une structure organique rédox puisse être mise en oeuvre comme matière active d'électrode positive sont l'électroactivité, la réversibilité et une quasi insolubilité dans l'électrolyte.

À titre d'exemple, des polymères conducteurs π-conjugués tels que le polypyrrole, le polythiophène, la polyaniline, le polyacétylène ou le polyacryloxy(TEMPO) (avec TEMPO : 2,2,6,6-tétraméthyl pipéridine-1-N-oxyle) ont été utilisés dans des batteries au lithium comme matériau d'électrode positive. Toutefois, ces structures organiques rédox présentent généralement des capacités spécifiques faibles de l'ordre de 100 mAh/g, notamment en raison du fait qu'elles ne permettent pas d'échanger plus de 0,5 électron par monomère au cours des réactions d'oxydoréductions.

L'utilisation de dérivés de la quinone comme matière active d'électrode positive, une quinone se caractérisant généralement par deux fonctions carbonylées présentes sur un noyau aromatique, a également suscité un intérêt croissant. À titre d'exemple, la 1,4-benzoquinone et la 9,10-phénanthrènequinone (qui présentent deux fonctions carbonylées) ont respectivement des capacités spécifiques théoriques élevées de l'ordre de 500 mAh/g et 256 mAh/g. En outre, elles peuvent subir théoriquement une réaction d'oxydoréduction à deux électrons. En particulier, JPS5686466 décrit une batterie lithium organique comprenant une électrode négative constituée de lithium métal ; une électrode positive comprenant de la 9,10-phénanthrènequinone comme matière active ; un électrolyte liquide constitué par du LiClO₄ en solution dans du carbonate de propylène ; et un séparateur imprégné dudit électrolyte liquide. La batterie présente une bonne stabilité en ce qui concerne sa capacité de décharge. Toutefois, la réversibilité des réactions d'oxydoréduction est insuffisante et la tension de décharge moyenne est relativement faible (i.e. de l'ordre de 2-2,5 volts). Des résultats similaires ont été obtenus avec l'anthraquinone.

Ainsi, il a été proposé des quinones comprenant un plus grand nombre de fonctions carbonylées (e.g. trois ou quatre fonctions carbonylées) afin d'améliorer les performances électrochimiques des batteries lithium organique. Par exemple, Yao et al. [Int. J. of Electrochem. Sci., 2011, 6, 2905] ont décrit une batterie lithium organique comprenant une électrode négative constituée d'une feuille de lithium métal ; une électrode positive constituée par un collecteur de courant en aluminium supportant un matériau d'électrode comprenant de la 5,7,12,14-pentacènetétrone (PT) comme matière active, du noir d'acétylène comme agent générant une conductivité électronique et du polytétrafluoroéthylène comme liant ; un électrolyte liquide constitué par du bis(trifluorométhanesulfonyl) imide de lithium (LiTFSI) en solution à 1 mol/l dans de la γ-butyrolactone ; et un séparateur en fibres de verre imprégné dudit électrolyte liquide. Toutefois, la résistance au cyclage d'une telle batterie reste faible puisque la capacité spécifique initiale est de l'ordre de 300 mAh/g et chute à 170 mAh/g après 10 cycles. Cette mauvaise stabilité au cyclage est principalement liée à la solubilité de la matière active d'électrode positive (PT) dans le solvant de l'électrolyte liquide (cf. γ-butyrolactone). En effet, la plupart des structures organiques rédox de faible masse molaire (i.e. masse molaire inférieure à 3000 g/mol) sont solubles dans le solvant de l'électrolyte liquide. Aussi, lorsqu'une structure organique rédox est utilisée comme matière active d'électrode, la conductivité électronique entre le collecteur de courant et ladite matière active devient insuffisante et la réactivité est réduite. En outre, la concentration de matière active pouvant être engagée dans une réaction d'oxydoréduction est diminuée, ce qui induit une chute de la capacité de la batterie.

D'autres structures organiques rédox à base d'indolin-3-one, telles que le colorant Indigo, également appelé Indigotine ou 2-(1,3-dihydro-3-oxo-2*H-*indole-2-ylidène)-1,2-dihydro-3*H*-indole-3-one, ont également été proposées. En particulier, Yao et al. [Chem. Letters, 2010, 39, 950] ont décrit une batterie lithium organique comprenant une électrode négative constituée d'une feuille de lithium métal ; une électrode positive constituée par un collecteur de courant en aluminium supportant un matériau d'électrode comprenant de l'Indigotine comme matière active, du noir d'acétylène comme agent générant une conductivité électronique et du polytétrafluoroéthylène comme liant ; un électrolyte liquide constitué par de l'hexafluorophosphate de lithium (LiPF₆) en solution à 1 mol/l dans un mélange de carbonate de propylène et de carbonate de diéthyle ; et un séparateur imprégné dudit électrolyte liquide. Là encore, la capacité spécifique chute de 200 mAh/g à 20 mAh/g après une dizaine de cycles, révélant une mauvaise stabilité au cyclage.

Afin d'éviter la dissolution de la matière active dans l'électrolyte, la demande de brevet EP 2546907 A1 décrit la fabrication d'une batterie lithium organique comprenant une électrode négative constituée d'une feuille de lithium métal ; une électrode positive constituée par un collecteur de courant en aluminium supportant un matériau d'électrode comprenant une structure organique rédox de type pyrène-4,5,9,10-tétraone répondant à la formule (1) suivante : 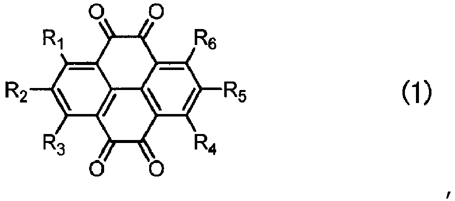 du noir d'acétylène comme agent générant une conductivité électronique et du polytétrafluoroéthylène comme liant ; un électrolyte liquide constitué par de l'hexafluorophosphate de lithium (LiPF₆) en solution à 1 mol/l dans un mélange de carbonate d'éthylène et de carbonate de méthyle et d'éthyle ; et un séparateur poreux en polyéthylène imprégné dudit électrolyte liquide. Les performances de la batterie lithium organique sont améliorées en termes de résistance au cyclage et de tension de décharge moyenne. Cependant, la préparation de la structure organique rédox répondant à la formule (1) est complexe (i.e. elle comprend un grand nombre d'étapes) et longue.

Ainsi, le but de la présente invention est de pallier les inconvénients de l'art antérieur précité et de fournir une batterie lithium organique économique, qui met en oeuvre des matières premières peu coûteuses, recyclables et non toxiques, et présentant de bonnes performances électrochimiques notamment en termes de résistance au cyclage.

Ces buts sont atteints par l'invention qui va être décrite ci-après.

L'invention a donc pour premier objet une batterie lithium organique comprenant :
- une électrode négative comprenant du lithium métal ou un alliage de lithium métal,
- une électrode positive éventuellement supportée par un collecteur de courant, ladite électrode positive comprenant au moins une structure organique rédox comprenant au moins deux fonctions carbonyles C=0, deux fonctions thiones C=S ou deux fonctions imines C=N, au moins un liant polymère P₁ et au moins un agent générant une conductivité électronique, ladite structure organique rédox étant différente des agents soufrés choisis parmi le soufre élémentaire S₈ et les composés organiques soufrés comprenant au moins une liaison S-S,
ladite batterie lithium organique étant caractérisée en ce qu'elle comprend en outre un électrolyte comprenant au moins un sel de lithium L₁ et au moins un polyéther linéaire ou cyclique liquide de masse molaire inférieure ou égale à 10 000 g·mol⁻¹ environ, étant entendu que :
* lorsque l'électrolyte est un électrolyte liquide, la concentration en sel de lithium L₁ dans ledit électrolyte liquide est d'au moins 1,6 mol/l environ, et l'électrolyte liquide imprègne un séparateur poreux, et
* lorsque l'électrolyte est un électrolyte polymère gélifié, il comprend en outre au moins un liant polymère P₂ soluble dans le polyéther linéaire ou cyclique liquide de masse molaire inférieure ou égale à 10 000 g·mol⁻¹ environ, et la concentration en sel de lithium L₁ dans ledit électrolyte polymère gélifié est telle que le rapport O/Li est d'au plus 15 environ, étant entendu que dans le rapport O/Li, « O » désigne le nombre d'atomes d'oxygène fournis par les unités éthers du polyéther linéaire ou cyclique liquide de masse molaire inférieure ou égale à 10 000 g·mol⁻¹ environ, et éventuellement par les unités éthers du liant polymère P₂ s'il en contient, et « Li » désigne le nombre d'ions lithium fournis par le sel de lithium L₁.

Les inventeurs de la présente demande ont ainsi découvert que l'utilisation d'une concentration élevée en sel de lithium associée à la présence d'un polyéther linéaire ou cyclique liquide de masse moléculaire inférieure ou égale à 10 000 g·mol⁻¹ environ dans l'électrolyte de la batterie lithium organique permettent d'améliorer significativement les performances électrochimiques de ladite batterie, notamment en termes de stabilité de la capacité spécifique pendant la décharge sur un grand nombre de cycles. Ceci est tout à fait surprenant dans la mesure où une augmentation de la concentration en sel de lithium dans un électrolyte conventionnel s'accompagne généralement d'une baisse de conductivité ionique, d'une augmentation de la viscosité et d'une diminution de la mobilité des ions lithium, induisant une diminution de la capacité spécifique et une limitation quant au régime de courant pouvant être utilisé.

Grâce à l'utilisation d'un tel électrolyte, la dissolution et la diffusion de la structure organique rédox de l'électrode positive dans la batterie sont fortement limitées.

En outre, la batterie lithium organique de l'invention présente l'avantage de pouvoir être mise en oeuvre avec diverses structures organiques rédox sans toutefois devoir modifier leurs structures, notamment par ajout de nouveaux groupes fonctionnels.

Le polyéther linéaire ou cyclique liquide est de préférence un polyéther linéaire ou cyclique liquide de masse molaire inférieure ou égale à 2000 g·mol^{- 1} environ, et de préférence encore inférieure ou égale à 600 g·mol⁻¹ environ.

Le polyéther liquide est de préférence linéaire.

Ledit polyéther linéaire ou cyclique liquide de l'électrolyte de la batterie de l'invention peut être choisi parmi :
* les polyéthylènes glycols de formule H-[O-CH₂-CH₂]ₘ-OH dans laquelle m est compris entre 1 et 13,
* les éthers de glycol de formule R-[O-CH₂-CH₂]ₚ-O-R' dans laquelle pest compris entre 1 et 13 et R et R', identiques ou différents, sont des groupes alkyle linéaires, ramifiés ou cycliques, pouvant comprendre de 1 à 20 atomes de carbone,
* les éthers de formule R¹-[CH₂-O]_{q}-R^{1'} dans laquelle q est compris entre 1 et 13, R¹ et R^{1'}, identiques ou différents, sont des groupes alkyle linéaires, ramifiés ou cycliques, pouvant comprendre de 1 à 20 atomes de carbone et éventuellement des hétéroatomes,
* les éthers cycliques pouvant comprendre de 2 à 20 atomes de carbone, les polyéthers cycliques pouvant comprendre de 3 à 40 atomes de carbone, et
* un de leurs mélanges.

Le(s) polyéther(s) utilisé(s) dans l'électrolyte de l'invention est (sont) particulièrement stable(s) vis-à-vis du lithium et des structures organiques rédox, permettant ainsi de limiter au maximum les réactions parasites.

Dans un mode de réalisation préféré, le polyéther linéaire ou cyclique liquide est le tétra éthylène glycol diméthyléther (TEGDME) de formule CH₃O-(CH₂-CH₂)₄-OCH₃ (i.e. R, R' = CH₃ et p = 4) ou le tétra éthylène glycol (TEG) de formule H-(O-CH₂-CH₂)₄-OH (i.e. m = 4).

Le sel de lithium L₁ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), le lithium bis(oxalato)borate (LiB(C₂O₄)₂ ou LiBOB) et leurs mélanges.

LiTFSI est le sel de lithium L₁ préféré.

Il va de soi que l'électrolyte de la batterie de l'invention est non-aqueux, c'est-à-dire qu'il ne comprend donc pas d'eau ou de solvants aqueux. En effet, un électrolyte aqueux n'est pas compatible avec une électrode négative en lithium métal.

L'électrolyte ne comprend pas, de préférence, de solvants organiques de type carbonate, ces derniers étant instables en présence d'une électrode au lithium à long terme et conduisant à la consommation de cette dernière par la formation d'une mousse de lithium.

Selon une première variante, l'électrolyte est un électrolyte liquide. Il imbibe alors complètement le séparateur poreux afin d'en imprégner la porosité.

Le choix du séparateur poreux n'est pas limitatif et celui-ci est bien connu de l'homme du métier.

Le séparateur poreux peut être en un matériau poreux non conducteur électronique, généralement en un matériau polymère à base de polyoléfine (e.g. polyéthylène) ou en fibres (e.g. fibres de verre ou fibres de bois).

Selon cette première variante, la concentration du sel de lithium L₁ dans l'électrolyte liquide va de 1,6 à 8 mol/l environ, de préférence de 1,8 à 6 mol/l environ, et de préférence encore de 2,1 à 5 mol/l environ.

L'électrolyte liquide peut être constitué par un sel de lithium L₁ en solution dans un solvant comprenant au moins un polyéther linéaire ou cyclique liquide.

L'électrolyte liquide peut être uniquement constitué d'un sel de lithium L₁ et d'un polyéther linéaire ou cyclique liquide.

L'électrolyte liquide est, de préférence, une solution comprenant 4,5 mol/l de LiTFSI dans du TEGDME.

Selon une deuxième variante, l'électrolyte est un électrolyte polymère gélifié.

Le rapport O/Li de l'électrolyte polymère gélifié peut aller de 2 à 15 environ, de préférence de 3 à 10 environ, et de préférence encore de 4 à 8 environ.

Le liant polymère P₂ de l'électrolyte polymère gélifié doit être soluble dans le polyéther liquide.

Le liant polymère P₂ peut permettre de solubiliser le sel de lithium L₁ présent en grande concentration dans l'électrolyte polymère gélifié et d'assurer la tenue mécanique dudit électrolyte polymère gélifié. L'électrolyte polymère gélifié peut alors être utilisé seul, c'est-à-dire sans séparateur poreux, et ainsi former un film d'électrolyte sec autoporté.

Le liant polymère P₂ de l'électrolyte polymère gélifié peut être choisi parmi :
* les polyoléfines telles que les homopolymères ou les copolymères d'éthylène, les homopolymères ou les copolymères de propylène (e.g. copolymère d'éthylène et de propylène) ;
* les polymères comprenant plusieurs unités éthers tels que les polyéthers, les polyétherimides ou les polyvinyles éthers ;
* les polymères halogénés tels que les homopolymères ou les copolymères de chlorure de vinyle, de fluorure de vinylidène (PVdF), de chlorure de vinylidène, de tétrafluorure d'éthylène ou de chlorotrifluoroéthylène ou les copolymères de fluorure de vinylidène et de hexafluoropropylène (PVdF-co-HFP) ;
* les polymères non conducteurs électroniques de type anionique tels que le poly(styrène sulfonate), le poly(acide acrylique), le poly(glutamate), l'alginate, la gélatine ou la pectine ;
* les polyacrylates ;
* les élastomères tels que les homopolymères ou les copolymères d'éthylène, de propylène, de styrène, de butadiène ou de chloroprène ; et
* un de leurs mélanges.

Par copolymère, on entend dans le présent texte, un composé polymère obtenu à partir d'au moins deux monomères différents.

Le liant polymère P₂ peut avoir une masse molaire strictement supérieure à 10 000 g·mol⁻¹ environ, de préférence strictement supérieure à 50 000 g·mol⁻¹ environ, et de préférence encore strictement supérieure à 100 000 g·mol⁻¹ environ.

Les polyéthers peuvent présenter une structure linéaire, peigne ou à blocs.

À titre d'exemples de polyéthers, on peut citer les homopolymères ou les copolymères d'oxyde d'éthylène (e.g. POE, copolymère du POE), d'oxyde de méthylène, d'oxyde de propylène, d'épichlorhydrine ou d'allylglycidyléther.

L'électrolyte polymère gélifié peut comprendre de 40 à 80% en masse environ de liant polymère P₂, et de préférence de 50 à 70% en masse environ de liant polymère P₂, par rapport à la masse totale de l'électrolyte polymère gélifié.

Selon une forme de réalisation particulièrement préférée de l'invention, le liant polymère P₂ est un mélange d'un polymère P_{2-A} et d'un polymère P_{2-B}, ledit polymère P_{2-A} permettant de solubiliser le sel de lithium L₁ présent en grande concentration dans l'électrolyte polymère gélifié et ledit polymère P_{2-B} permettant d'assurer la tenue mécanique dudit électrolyte polymère gélifié.

Il suffit que l'un quelconque des polymères P_{2-A} ou P_{2-B} soit soluble dans le polyéther linéaire ou cyclique liquide de masse molaire inférieure ou égale à 10 000 g·mol⁻¹ environ.

De préférence, les deux polymères P_{2-A} et P_{2-B} sont solubles dans le polyéther linéaire ou cyclique liquide de masse molaire inférieure ou égale à 10 000 g·mol⁻¹ environ.

Le polymère P_{2-A} peut être un polymère comprenant plusieurs unités éthers tel que défini précédemment.

Le polymère P_{2-B} peut être un polymère halogéné tel que défini précédemment.

L'électrolyte polymère gélifié peut comprendre de 5 à 30% en masse environ de polymère P_{2-A}, et de préférence de 10 à 25% en masse environ de polymère P_{2-A}, par rapport à la masse totale de l'électrolyte polymère gélifié.

Les polymères P_{2-A} préférés sont le copolymère d'oxyde d'éthylène et d'oxyde de propylène et le copolymère d'oxyde d'éthylène et d'oxyde de butylène.

L'électrolyte polymère gélifié peut comprendre de 20 à 50% en masse environ de polymère P_{2-B}, et de préférence de 30 à 45% en masse environ de polymère P_{2-B}, par rapport à la masse totale de l'électrolyte polymère gélifié.

Les polymères P_{2-B} préférés sont le polyfluorure de vinylidène (PVdF) et le copolymère de fluorure de vinylidène et de hexafluoropropylène (PVdF-co-HFP).

L'électrolyte polymère gélifié peut comprendre de 18 à 50% en masse environ de sel de lithium L₁, de préférence encore de 25 à 50% en masse environ de sel de lithium L₁, et de préférence encore de 30 à 45% en masse environ de sel de lithium L₁ par rapport à la masse totale de l'électrolyte polymère gélifié.

L'électrolyte polymère gélifié peut comprendre de 1 à 35% en masse environ de polyéther linéaire ou cyclique liquide, de préférence de 2 à 30% en masse environ de polyéther linéaire ou cyclique liquide, et de préférence encore de 2 à 15% en masse environ de polyéther linéaire ou cyclique liquide, par rapport à la masse totale de l'électrolyte polymère gélifié.

La batterie conforme à l'invention peut fonctionner entre 0 et 110°C environ, et de préférence entre 20 et 100°C environ.

Dans un mode de réalisation particulier de l'invention, l'électrode positive de la batterie de l'invention comprend au moins 50% en masse environ de structure organique rédox, et de préférence au moins 65% en masse environ de structure organique rédox, par rapport à la masse totale de ladite électrode positive.

Dans la présente invention, l'expression « structure organique rédox » signifie une structure organique électroactive capable de réagir réversiblement avec le lithium, c'est-à-dire une structure organique capable de mettre en oeuvre une ou plusieurs réactions d'oxydoréductions réversibles, en échangeant des électrons avec une électrode et simultanément en s'associant avec des ions lithium.

La structure organique rédox représente la matière active de l'électrode positive (i.e. le matériau d'électrode positive) de la batterie lithium organique de l'invention.

Dans la présente invention, la structure organique rédox étant différente des agents soufrés choisis parmi le soufre élémentaire S₈ et les composés organiques soufrés comprenant au moins une liaison S-S, celle-ci n'est pas une matière active d'électrode positive telle que celles généralement utilisées comme matière active d'électrode positive d'une batterie lithium soufre. Les composés organiques soufrés comprenant au moins une liaison S-S peuvent être les polysulfures organiques, notamment ceux de formule générale R²-S-Sₙ-R³ dans laquelle R² et R³, identiques ou différents, représentent une chaîne alkyle linéaire, ramifiée ou cyclique, pouvant comprendre de 1 à 20 atomes de carbone, et n étant compris entre 1 et 50 ; ou les polymères disulfures présentant un enchaînement de liaisons S-S pouvant être cassées lors du cycle de décharge d'une batterie lithium soufre, et reformées lors du cycle de charge. Les composés organiques soufrés comprenant au moins une liaison S-S peuvent être également les composés de formule Li₂S_{w} dans laquelle w > 1 ou les polymères carbone-soufre de formule (C₂Sₓ₁)_{y1} dans laquelle x₁ = 2,5-50 et y₁ ≥ 2.

La structure organique rédox peut être différente de Li₂S qui correspond à l'état déchargé des composés de formule Li₂S_{w} tels que définis ci-dessus.

La structure organique rédox comprend au moins deux fonctions carbonyles C=O, deux fonctions thiones C=S ou deux fonctions imines C=N, éventuellement présentes sur au moins un noyau aromatique. Les fonctions carbonyles sont préférées.

Selon une forme particulièrement préférée de l'invention, la structure organique rédox appartient à l'une quelconque des familles suivantes : les quinones, les anthraquinones, les benzoquinones, les naphthoquinones, les oxo-indolylidènes, les composés dérivés du squelette C₆O₆ (i.e. dérivés du rhodizonate), les composés comprenant au moins un pyracène tétracyclique, et les composés dérivés du squelette calix[4]arène.

La structure organique rédox comprenant au moins deux fonctions thiones C=S peut être choisie parmi les équivalents soufrés de ces composés, par exemple les cyclohexadiènedithiones, les composés dérivés du squelette C₂S₂(C₆H₄)₂, les thio-indolylidènes et les dérivés du squelette C₆OₙS₆₋ₙ.

L'électrode positive peut comprendre de 1 à 30% en masse environ, et de préférence de 2 à 20% environ en masse environ d'agent générant une conductivité électronique, par rapport à la masse totale de l'électrode positive.

L'agent générant une conductivité électronique convenant pour la présente invention est de préférence choisi parmi le noir de carbone, le carbone SP, le noir d'acétylène, les fibres et nanofibres de carbone, les nanotubes de carbone, le graphène, le graphite, les particules et fibres métalliques et l'un de leurs mélanges.

L'agent générant une conductivité électronique est de préférence le noir de carbone.

De préférence, l'agent générant une conductivité électronique est sous forme de particules sphériques (i.e. sous forme de billes) afin de favoriser la conduction notamment dans le sens perpendiculaire à l'électrode positive (i.e. dans le sens de son épaisseur) et ainsi de favoriser les processus électrochimiques au sein de l'électrode. En effet, les particules d'agent générant une conductivité électronique sous forme sphériques ont une propension à former des réseaux conducteurs tridimensionnels.

À titre d'exemple de noir de carbone, on peut citer les noirs de carbone commercialisés sous les références : Ketjenblack 600JD®, Ketjenblack 700JD® et Timcal Ensaco 350G®.

Selon une forme de réalisation particulière, l'électrode positive comprend de 2 à 30% en masse environ de liant polymère P₁, et de préférence de 5 à 20% en masse environ de liant polymère P₁, par rapport à la masse totale de l'électrode positive.

Le liant polymère P₁ peut être choisi parmi les copolymères et les homopolymères d'éthylène ; les copolymères et les homopolymères de propylène ; les homopolymères et les copolymères d'oxyde d'éthylène (e.g. POE, copolymère du POE), d'oxyde de méthylène, d'oxyde de propylène, d'épichlorhydrine, d'allylglycidyléther et leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polyacrylates tels que le polyméthacrylate de méthyle ; les polyalcools tels que l'alcool polyvinylique (PVA) ; les polymères conducteurs électroniques tels que la polyaniline, le polypyrrole, les polyfluorènes, les polypyrènes, les polyazulènes, les polynaphtalènes, les polyacétylènes, le poly(p-phénylène-vinylène), les polycarbazoles, les polyindoles, les polyazépines, les polythiophènes, le polysulfure de p-phénylène ou leurs mélanges ; les polymères de type cationique tels que le polyéthylèneimine (PEI), la polyaniline sous forme de sel éméraldine (ES), le poly(N-vinylimidazole quaternisé), le poly(acrylamide-co-chlorure de diallyldiméthyl ammonium) (AMAC) ou leurs mélanges ; et un de leurs mélanges.

Le liant polymère P₁ est de préférence un copolymère du POE ou un copolymère de fluorure de vinylidène et de hexafluoropropylène.

L'électrode positive peut comprendre en outre au moins un polyéther linéaire ou cyclique liquide tel que défini dans la présente invention. La présence du polyéther linéaire ou cyclique liquide dans l'électrode positive permet d'améliorer sa conductivité ionique.

L'électrode positive peut alors comprendre de 2 à 30% en masse environ de polyéther linéaire ou cyclique liquide, et de préférence de 8 à 20% en masse environ de polyéther linéaire ou cyclique liquide, par rapport à la masse totale de l'électrode positive.

L'électrode positive peut comprendre en outre au moins un sel de lithium L₂.

L'électrode positive peut alors comprendre de 1 à 25% en masse environ de sel de lithium L₂, de préférence de 1 à 15% en masse environ de sel de lithium L₂, et de préférence encore de 1 à 10% en masse environ de sel de lithium L₂, par rapport à la masse totale de l'électrode positive.

Le sel de lithium L₂ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), le lithium bis(oxalato)borate (LiB(C₂O₄)₂ ou LIBOB) et leurs mélanges.

LiTFSI est le sel de lithium L₂ préféré.

L'électrode positive de l'invention peut présenter une porosité inférieure ou égale à 40% en volume environ, et de préférence inférieure ou égale à 30% en volume environ, par rapport au volume total de l'électrode positive. Cela permet ainsi d'améliorer la densité d'énergie de la batterie.

Il convient de noter que la masse totale de l'électrode positive comprend la masse de la structure organique rédox, la masse du liant polymère P₁, la masse de l'agent générant une conductivité électronique, éventuellement la masse du polyéther linéaire ou cyclique liquide s'il est présent et éventuellement la masse du sel de lithium L₂ s'il est présent.

L'électrode positive peut être préparée :
a) en mélangeant au moins une structure organique rédox avec au moins un agent générant une conductivité électronique, au moins un liant polymère P₁, éventuellement au moins un sel de lithium L₂, éventuellement au moins un polyéther linéaire ou cyclique liquide, et éventuellement au moins un solvant dudit liant polymère P₁, pour obtenir une pâte d'électrode,
b) en appliquant ladite pâte d'électrode sur au moins un support,
c) en séchant ladite pâte d'électrode pour obtenir une électrode positive sous forme de film supporté.

Le liant polymère P₁, le sel de lithium L₂ et le polyéther linéaire ou cyclique liquide sont tels que définis dans la présente invention.

L'étape a) peut être réalisée par extrusion ou par broyage.

L'extrusion est très avantageuse puisqu'elle permet d'obtenir facilement des électrodes peu poreuses tout en utilisant peu de solvant. Elle permet également d'éviter une étape de calandrage sur l'électrode sèche qui peut engendrer des modifications de structure de l'électrode, et nuire à la qualité du réseau percolant électronique. Enfin, l'étape de calandrage présente l'inconvénient d'augmenter le nombre d'étapes pour obtenir l'électrode et ainsi son coût de production.

Le solvant du liant polymère P₁ de l'étape a) permet de solubiliser ledit liant polymère P₁.

Lorsqu'il est présent, ledit solvant représente de préférence moins de 30% en masse environ de la masse totale du mélange de la structure organique rédox, d'agent générant une conductivité électronique, de liant polymère P₁, éventuellement de sel de lithium L₂ et éventuellement de polyéther linéaire ou cyclique liquide.

L'utilisation lors de la fabrication de l'électrode positive d'une faible quantité de solvant du liant polymère P₁ permet de conduire à une électrode positive de faible porosité (i.e. ≤ 40% en volume environ). Cette faible porosité permet de contrôler et d'optimiser la quantité de structure organique rédox présente dans l'électrode positive, et ainsi de parvenir à des densités volumiques d'énergie optimales.

Le solvant de l'étape a) peut être choisi parmi l'eau, la *N*-méthylpyrrolidone, les solvants de type carbonate, tels que le carbonate d'éthylène, le carbonate de propylène, le carbonate de diméthyle, le carbonate de diéthyle ou le carbonate de méthyle et d'éthyle, l'acétone, les alcools tels que le méthanol, l'éthanol ou le propanol, et leurs mélanges.

Le solvant est de préférence choisi parmi l'eau, l'acétone, les alcools, et leurs mélanges.

L'étape b) peut être réalisée par laminage ou par enduction.

Le support peut être un collecteur de courant et/ou un film de support.

À titre d'exemple de collecteur de courant, on peut citer un collecteur de courant en aluminium recouvert d'une couche à base de carbone (couche anticorrosion).

À titre d'exemple de film de support, on peut citer un film plastique de type polyéthylène téréphtalate (PET) siliconé.

Le film supporté d'électrode positive obtenu à l'issue de l'étape c) peut avoir une épaisseur allant de 2 à 100 µm environ, et de préférence de 10 à 60 µm environ.

L'étape c) peut être réalisée à une température suffisante pour permettre d'éliminer le solvant de l'étape a).

L'invention a pour deuxième objet un procédé de fabrication d'une batterie lithium organique telle que définie dans le premier objet de l'invention, caractérisé en ce qu'il comprend les étapes suivantes :
A) une étape de préparation d'un électrolyte liquide ou d'un électrolyte polymère gélifié tel que défini dans la présente invention, notamment par mélange d'au moins un polyéther linéaire ou cyclique liquide d avec au moins un sel de lithium L₁,
ledit procédé comprenant en outre l'une ou l'autre des séquences B1 ou B2 suivantes :
B1) une étape d'assemblage d'une électrode positive, d'une électrode négative, telles que définies dans la présente invention, et d'un électrolyte polymère gélifié préparé à l'étape A), ou
B2-i) une étape d'assemblage d'une électrode positive, d'une électrode négative et d'un séparateur poreux, tels que définis dans la présente invention, et
B2-ii) une étape d'imprégnation de l'assemblage tel qu'obtenu à l'étape B2-i) par l'électrolyte liquide préparé à l'étape A).

Le polyéther linéaire ou cyclique liquide, le sel de lithium L₁ et le liant polymère P₂ sont tels que définis dans le premier objet de l'invention.

L'électrolyte liquide de l'étape A) est de préférence préparé en dissolvant sous agitation au moins un sel de lithium L₁ dans un polyéther linéaire ou cyclique liquide, éventuellement à une température allant de 20 à 120°C environ.

L'électrolyte polymère gélifié de l'étape A) peut être obtenu par extrusion d'au moins un liant polymère P₂ avec une solution comprenant au moins un polyéther linéaire ou cyclique liquide et au moins un sel de lithium L₁ pour obtenir une pâte d'électrolyte, puis par laminage de la pâte d'électrolyte, notamment entre deux films de support pour obtenir un film d'électrolyte polymère gélifié.

L'extrusion peut être réalisée à une température allant de 60 à 170°C environ.

Les deux films de support peuvent être des films plastiques de PET siliconés.

La présente invention est illustrée par les exemples ci-après, auxquels elle n'est cependant pas limitée.

### EXEMPLES

Les matières premières utilisées dans les exemples sont listées ci-après :
- noir de carbone « Ketjenblack 600JD® », AkzoNobel,
- Indigotine, 2-(1,3-dihydro-3-oxo-2*H*-indole-2-ylidène)-1,2-dihydro-3*H*-indole-3-one, de pureté 95%, Sigma Aldrich,
- copolymère du POE (co-POE), Mw ∼ 10⁵ g.mol⁻¹, « ZSN 8100 », Zeospan,
- copolymère de fluorure de vinylidène et de hexafluoropropylène (PVdF-co-HFP), Mw = 6.10⁵ g.mol⁻¹, « Solex », Solvay,
- LiTFSI, 3M,
- Film de PET siliconé, Mitsubishi,
- Tétra éthylène glycol diméthyléther (TEGDME) de pureté 99%, Sigma Aldrich,
- Séparateur monocouche en polypropylène, Celgard 2500,
- N-méthylpyrrolidone (NMP), de pureté 99,5%, Sigma Aldrich.

Sauf indications contraires, tous les matériaux ont été utilisés tels que reçus des fabricants.

### EXEMPLE 1

### Fabrication de batteries B-1, B-2 et B-3

### 1.1 Préparation de l'électrode positive

3 g de noir de carbone Ketjenblack, 21 g d'Indigotine, 4,8 g de copolymère du co-POE, 1,2 g de sel de lithium (LiTFSI) et 5 g d'eau ont été mélangés à 80°C pendant 20 minutes dans un mélangeur vendu sous la dénomination commerciale Plastograph® EC par la société Brabender®. La quantité d'eau utilisée représentait 16,6% en masse environ de la masse totale du noir de carbone, de l'Indigotine, du copolymère du co-POE et du sel de lithium LiTFSI.

La pâte ainsi obtenue a ensuite été laminée à 95°C sur un collecteur de courant en aluminium recouvert d'une couche à base de carbone.

Le film ainsi obtenu a été séché à 110°C pendant 20 minutes dans une étuve pour obtenir une électrode positive **E-1** sous forme de film conforme à l'invention.

Le tableau 1 ci-dessous présente la composition massique de l'électrode positive **E-1** obtenue :

**TABLEAU 1**

| **Electrode positive** | **Noir de carbone (%)** | **Sel de lithium (%)** | **Co-POE (%)** | **Indigo (%)** |
|---|---|---|---|---|
| **E-1** | 10 | 4 | 16 | 70 |

### 1.2 Préparation d'électrolytes polymères gélifiés

Du sel de lithium (LiTFSI) a été dissous dans du TEGDME sous agitation magnétique à 50°C. Puis, au mélange obtenu, a été ajouté un copolymère du POE Zeospan® et un copolymère de fluorure de vinylidène et de hexafluoropropylène (PVdF-co-HFP). Le mélange résultant a été malaxé dans le mélangeur Plastograph® EC tel que décrit dans l'exemple 1.1, à 130°C pendant 40 minutes. La pâte d'électrolyte obtenue a été laminée à 125°C entre deux films plastiques de PET siliconés.

Le tableau 2 ci-dessous présente la composition massique de deux électrolytes polymères gélifiés obtenues :

**TABLEAU 2**

| **Electrolyte Polymère gélifié** | **TEGDME (%)** | **Sel de lithium (%)** | **Co-POE (%)** | **PVdF-co-HFP (%)** | **Rapport O/Li** |
|---|---|---|---|---|---|
| **PG-1** | 6 | 39 | 20 | 35 | 4 |
| **PG-2** | 24,7 | 13,3 | 22 | 40 | 22 |

### 1.3 Préparation d'un électrolyte polymère solide

L'électrolyte polymère solide a été préparé par extrusion d'un mélange de sel de lithium (LiTFSI), de copolymère du POE Zeospan® et de PVDF-co-HFP, puis par laminage de la pâte d'électrolyte obtenue à 125°C entre deux films plastiques de PET siliconés.

Le tableau 3 ci-dessous présente la composition massique de l'électrolyte polymère solide obtenu :

**TABLEAU 3**

| **Electrolyte Polymère solide** | **TEGDME (%)** | **Sel de lithium (%)** | **Co-POE (%)** | **PVdF-co-HFP (%)** |
|---|---|---|---|---|
| **PS-1** | 0 | 12 | 48 | 40 |

L'électrolyte polymère solide non conforme à l'invention et tel que préparé ci-dessus, comprend une concentration en sel de lithium telle que le rapport O/Li du nombre d'atomes d'oxygène fournis par les unités éthers du co-POE sur le nombre d'ions lithium fournis par le sel de lithium est de 22.

### 1.4 Fabrication de batteries lithium organique

Trois batteries **B-1, B-2** et **B-3** ont été préparées en assemblant sous atmosphère anhydre (air avec un point de rosée < -40°C) par laminage manuel à température ambiante :
- l'électrode positive **E-1** obtenue dans l'exemple 1.1 ci-dessus,
- une électrode négative comprenant du lithium métal sous forme d'un film de lithium métal de 100 µm d'épaisseur environ, et
- l'électrolyte polymère gélifié **PG-1** obtenu dans l'exemple 1.2 ci-dessus, ou l'électrolyte polymère gélifié **PG-2** obtenu dans l'exemple 1.2 ci-dessus, ou l'électrolyte polymère solide **PS-1** obtenu dans l'exemple 1.3 ci-dessus.

La batterie **B-1** est conforme à l'invention puisqu'elle comprend une électrode positive, une électrode négative et un électrolyte polymère gélifié tels que définis dans la présente invention.

En revanche, les batteries **B-2** et **B-3** ne sont pas conformes à l'invention puisqu'elles ne comprennent pas un électrolyte liquide ou polymère gélifié tel que défini dans la présente invention.

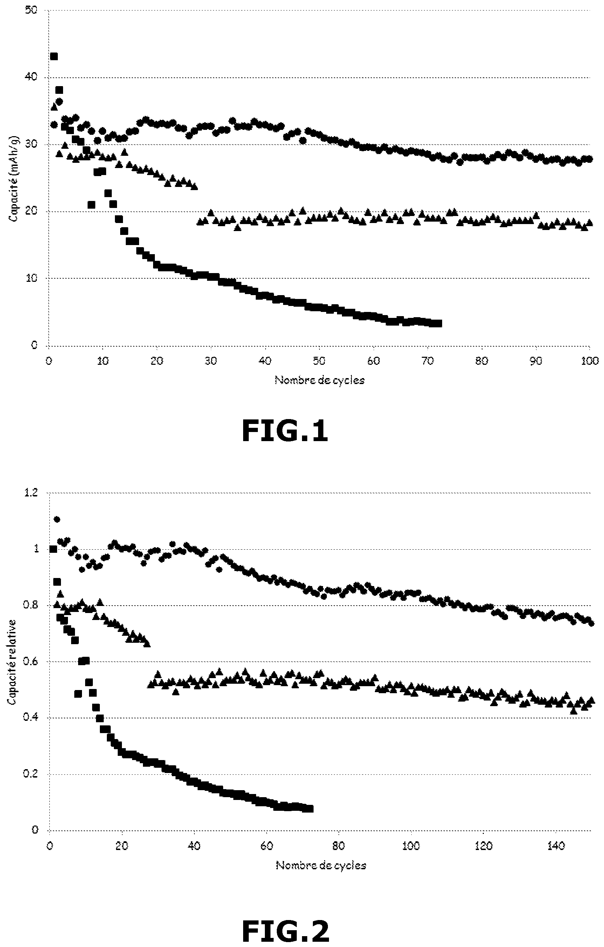

La capacité spécifique (en mAh/g) de la batterie **B-1** (courbe avec les ronds pleins), de la batterie **B-2** (courbe avec les triangles pleins), et de la batterie **B-3** (courbe avec les carrés pleins) en fonction du nombre de cycles à un régime de courant de C/10 et à une température de 100°C est reportée sur la figure 1.

Ces résultats montrent que l'utilisation d'un électrolyte polymère gélifié tel que défini dans la présente invention permet de conserver une capacité spécifique initiale du même ordre de grandeur que celles obtenues avec un électrolyte polymère solide (batterie **B-3)** dans des batteries lithium organique.

La capacité relative correspondant au rapport de la capacité de décharge du cycle n sur la capacité de décharge du premier cycle, des batteries **B-1** (courbe avec les ronds pleins), **B-2** (courbe avec les triangles pleins) et **B-3** (courbe avec les carrés pleins) en fonction du nombre de cycles à un régime de courant de C/10 et une température de 100°C est reportée sur la figure 2.

En particulier, la figure 2 montre pour la batterie **B-3** (électrolyte polymère solide) une chute très rapide de la capacité de décharge au cours des premiers cycles et l'absence de stabilisation dans les cycles ultérieurs, probablement liées à une dissolution de l'Indigotine dans l'électrolyte polymère solide et ainsi, sa diffusion. En revanche, l'utilisation d'un électrolyte polymère gélifié tel que défini dans la présente invention permet d'améliorer significativement la cyclabilité de la batterie lithium organique.

L'utilisation d'un électrolyte polymère solide présentant une concentration en sel de lithium telle que le rapport O/Li du nombre d'atomes d'oxygène fournis par les unités éthers du co-POE sur le nombre d'ions lithium fournis par le sel de lithium est supérieur à 15 n'est pas non plus approprié puisqu'il engendrerait une augmentation significative de la viscosité de l'électrolyte, et ainsi un abaissement significatif de la capacité restituée et donc de la densité d'énergie.

### EXEMPLE 2

### Fabrication de batteries B-4 et B-5

### 2.1 Préparation de l'électrode positive

1,75 g de noir de carbone Ketjenblack, 24,5 g d'Indigotine, 4,53 g de TEGDME, 1,42 g de sel de lithium (LiTFSI), 2,8 g de polymère PVDF-co-HFP et 5 g de N-méthylpyrrolidone (NMP) ont été mélangés à 120°C pendant 20 minutes dans un mélangeur vendu sous la dénomination commerciale Plastograph® EC par la société Brabender®. La quantité de NMP utilisée représentait 14% en masse environ de la masse totale du noir de carbone, de l'Indigotine, du TEGDME, du sel de lithium LiTFSI et du PVDF-co-HFP.

La pâte ainsi obtenue a ensuite été laminée à 80°C sur un collecteur de courant en aluminium recouvert d'une couche à base de carbone.

Le film ainsi obtenu a été séché à 110°C pendant 20 minutes dans une étuve pour obtenir une électrode positive **E-2** sous forme de film conforme à l'invention.

Le tableau 4 ci-dessous présente la composition massique de l'électrode positive **E-2** obtenue :

**TABLEAU 4**

| **Electrode positive** | **Noir de carbone (%)** | **Sel de lithium (%)** | **TEGDME (%)** | **PVDF-co- HFP (%)** | **Indigo (%)** |
|---|---|---|---|---|---|
| **E-2** | 5 | 4,06 | 12,94 | 8 | 70 |

### 2.2 Préparation de deux électrolytes liquides

Deux électrolytes liquides **L-1** et **L-2** ont été préparés par dissolution d'un sel de lithium LiTFSI dans du TEGDME sous agitation magnétique pendant 10 min à 50°C. L'électrolyte liquide **L-1,** conforme à l'invention, présentait une concentration en sel de lithium égale à 2,27 mol/l. L'électrolyte liquide **L-2,** non conforme à l'invention, présentait une concentration de 0,9 mol/l.

### 2.3 Fabrication de batteries lithium organique

Deux batteries **B-4** et **B-5** ont été préparées en assemblant sous atmosphère anhydre (air avec un point de rosée < -40°C) par laminage manuel à température ambiante :
- l'électrode positive **E-2** obtenue dans l'exemple 2.1 ci-dessus,
- une électrode négative comprenant du lithium métal sous forme d'un film de lithium métal de 100 µm d'épaisseur environ, et
- un séparateur Celgard 2500 imprégné de l'électrolyte liquide **L-1** obtenu dans l'exemple 2.2 ci-dessus, ou un séparateur Celgard 2500 imprégné de l'électrolyte liquide **L-2** obtenu dans l'exemple 2.2 ci-dessus.

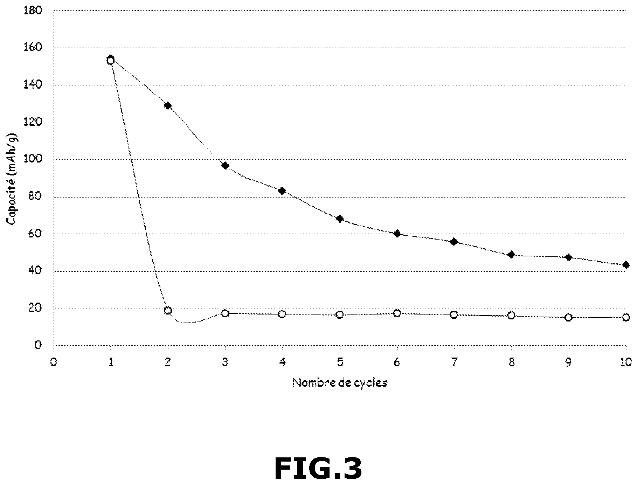

La capacité spécifique (en mAh/g) de la batterie **B-4** (courbe avec les losanges noirs pleins) et de la batterie **B-5** (courbe avec les ronds vides) en fonction du nombre de cycles à un régime de courant de C/20-D/20 (une charge ou une décharge en 20 heures) et à une température de 40°C est reportée sur la figure 3.

Cette figure 3 met en évidence une chute plus lente de la capacité de décharge pour la batterie **B-4** conforme à l'invention (courbe avec les losanges noirs pleins), ce qui atteste de l'efficacité d'une teneur en sel de lithium élevée pour ralentir la diffusion de la matière active dans l'électrolyte liquide.

## Revendications

1. Batterie lithium organique comprenant :
- une électrode négative comprenant du lithium métal ou un alliage de lithium métal,
- une électrode positive éventuellement supportée par un collecteur de courant, ladite électrode positive comprenant au moins une structure organique rédox comprenant au moins deux fonctions carbonyles C=0, deux fonctions thiones C=S ou deux fonctions imines C=N, au moins un liant polymère P₁ et au moins un agent générant une conductivité électronique, ladite structure organique rédox étant différente des agents soufrés choisis parmi le soufre élémentaire S₈ et les composés organiques soufrés comprenant au moins une liaison S-S,
ladite batterie lithium organique étant **caractérisée en ce qu'**elle comprend en outre un électrolyte comprenant au moins un sel de lithium L₁ et au moins un polyéther linéaire ou cyclique liquide de masse molaire inférieure ou égale à 10 000 g·mol⁻¹, étant entendu que :
* lorsque l'électrolyte est un électrolyte liquide, la concentration en sel de lithium L₁ dans ledit électrolyte liquide est d'au moins 1,6 mol/l, et l'électrolyte liquide imprègne un séparateur poreux, et
* lorsque l'électrolyte est un électrolyte polymère gélifié, il comprend en outre au moins un liant polymère P₂ soluble dans le polyéther linéaire ou cyclique liquide de masse molaire inférieure ou égale à 10 000 g·mol⁻¹ et la concentration en sel de lithium L₁ dans ledit électrolyte polymère gélifié est telle que le rapport O/Li est d'au plus 15, étant entendu que dans le rapport O/Li, « O » désigne le nombre d'atomes d'oxygène fournis par les unités éthers du polyéther linéaire ou cyclique liquide de masse molaire inférieure ou égale à 10 000 g·mol⁻¹, et éventuellement par les unités éthers du liant polymère P₂ s'il en contient, et « Li » désigne le nombre d'ions lithium fournis par le sel de lithium L₁.

2. Batterie selon la revendication 1, **caractérisée en ce que** le sel de lithium L₁ est choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), le lithium bis(oxalato)borate (LiB(C₂O₄)₂ ou LiBOB) et leurs mélanges.

3. Batterie selon l'une quelconque des revendications précédentes, **caractérisée en ce que** l'électrode positive comprend au moins 50% en masse de structure organique rédox par rapport à la masse totale de ladite électrode positive.

4. Batterie selon l'une quelconque des revendications précédentes, **caractérisée en ce que** l'électrode positive comprend de 1 à 30% en masse d'agent générant une conductivité électronique par rapport à la masse totale de l'électrode positive.

5. Batterie selon l'une quelconque des revendications précédentes, **caractérisée en ce que** l'agent générant une conductivité électronique est choisi parmi le noir de carbone, le carbone SP, le noir d'acétylène, les fibres et nanofibres de carbone, les nanotubes de carbone, le graphène, le graphite, les particules et fibres métalliques et l'un de leurs mélanges.

6. Batterie selon l'une quelconque des revendications précédentes, **caractérisée en ce que** l'électrode positive comprend de 2 à 30% en masse de liant polymère P₁ par rapport à la masse totale de l'électrode positive.

7. Batterie selon l'une quelconque des revendications précédentes, **caractérisée en ce que** le liant polymère P₁ est choisi parmi les copolymères et les homopolymères d'éthylène ; les copolymères et les homopolymères de propylène ; les homopolymères et les copolymères d'oxyde d'éthylène, d'oxyde de méthylène, d'oxyde de propylène, d'épichlorhydrine, d'allylglycidyléther et leurs mélanges ; les polymères halogénés ; les polyacrylates ; les polyalcools ; les polymères conducteurs électroniques ; les polymères de type cationique ; et un de leurs mélanges.

8. Batterie selon l'une quelconque des revendications précédentes, **caractérisée en ce que** le liant polymère P₂ est choisi parmi les polyoléfines, les polymères comprenant plusieurs unités éthers, les polymères halogénés, les polymères non conducteurs électroniques de type anionique, les polyacrylates, les élastomères et un de leurs mélanges.

9. Batterie selon l'une quelconque des revendications précédentes, **caractérisée en ce que** l'électrolyte polymère gélifié comprend de 40 à 80% en masse de liant polymère P₂ par rapport à la masse totale de l'électrolyte polymère gélifié.

10. Batterie selon l'une quelconque des revendications précédentes, **caractérisée en ce que** le liant polymère P₂ est un mélange d'un polymère P_{2-A} et d'un polymère P_{2-B}, ledit polymère P_{2-A} permettant de solubiliser le sel de lithium L₁ présent en grande concentration dans l'électrolyte polymère gélifié et ledit polymère P_{2-B} permettant d'assurer la tenue mécanique dudit électrolyte polymère gélifié.

11. Batterie selon la revendication 10, **caractérisée en ce que** le polymère P_{2-A} est un polymère comprenant plusieurs unités éthers et le polymère P_{2-B} est un polymère halogéné.

12. Batterie selon l'une quelconque des revendications précédentes, **caractérisée en ce que** le rapport O/Li de l'électrolyte polymère gélifié va de 3 à 10.

13. Batterie selon l'une quelconque des revendications précédentes, **caractérisée en ce que** l'électrolyte polymère gélifié comprend de 1 à 35% en masse de polyéther linéaire ou cyclique liquide par rapport à la masse totale de l'électrolyte polymère gélifié.

14. Batterie selon l'une quelconque des revendications 1 à 7, **caractérisée en ce que** la concentration du sel de lithium L₁ dans l'électrolyte liquide va de 1,8 à 6 mol/l.

15. Procédé de fabrication d'une batterie lithium organique telle que définie dans l'une quelconque des revendications 1 à 14, **caractérisé en ce qu'**il comprend les étapes suivantes :
A) une étape de préparation d'un électrolyte liquide ou d'un électrolyte polymère gélifié tel que défini dans l'une quelconque des revendications 1 à 14,
ledit procédé comprenant en outre l'une ou l'autre des séquences B1 ou B2 suivantes :
B1) une étape d'assemblage d'une électrode positive, d'une électrode négative, telles que définies dans l'une quelconque des revendications 1 à 14, et d'un électrolyte polymère gélifié préparé à l'étape A), ou
B2-i) une étape d'assemblage d'une électrode positive, d'une électrode négative et d'un séparateur poreux, tels que définis dans l'une quelconque des revendications 1 à 14, et
B2-ii) une étape d'imprégnation de l'assemblage tel qu'obtenu à l'étape B2-i) par l'électrolyte liquide préparé à l'étape A).

## Patentansprüche

1. Organische Lithium-Batterie, umfassend:
- eine negative Elektrode, umfassend Lithiummetall oder eine Lithiummetalllegierung,
- eine positive Elektrode, die eventuell von einem Stromsammler getragen wird, wobei die positive Elektrode mindestens eine organische Redoxstruktur umfasst, umfassend mindestens zwei Carbonylfunktionen C=0, zwei Thionfunktionen C=S oder zwei Iminfunktionen C= N, mindestens ein Polymerbindemittel P₁ und mindestens ein Mittel, das eine elektronische Leitfähigkeit erzeugt, wobei die organische Redoxstruktur von den Schwefelmitteln unterschiedlich ist, die aus dem elementaren Schwefel S₈ und den organischen Schwefelverbindungen, die mindestens eine Bindung S-S umfassen, ausgewählt sind,
wobei die organische Lithiumbatterie **dadurch gekennzeichnet ist, dass** sie ferner einen Elektrolyten umfasst, umfassend mindestens ein Lithiumsalz L₁ und mindestens einen flüssigen linearen oder cyclischen Polyether mit einer molaren Masse von unter oder gleich 10.000 g · mol⁻¹, wobei gilt:
* wenn der Elektrolyt ein flüssiger Elektrolyt ist, beträgt die Konzentration an Lithiumsalz L₁ in dem flüssigen Elektrolyten mindestens 1,6 mol/l, und der flüssige Elektrolyt imprägniert einen porösen Separator, und
* wenn der Elektrolyt ein gelierter Polymerelektrolyt ist, umfasst er ferner mindestens ein in dem flüssigen linearen oder cyclischem Polyether mit einer molaren Masse von unter oder gleich 10.000 g · mol⁻¹ lösliches Polymerbindemittel P₂, und die Konzentration an Lithiumsalz L₁ in dem gelierten Polymerelektrolyt ist derart, dass das Verhältnis O/Li höchstens 15 beträgt, wobei es sich versteht, dass in dem Verhältnis O/Li "O" die Anzahl Sauerstoffatome bedeutet, die von den Ethereinheiten des flüssigen linearen oder cyclischem Polyether mit einer molaren Masse von unter oder gleich 10.000 g · mol⁻¹ und eventuell von den Ethereinheiten des Polymerbindemittels P₂, wenn es diese enthält, bereitgestellt werden, und "Li" die Anzahl von Lithiumionen bezeichnet, die von dem Lithiumsalz L₁ bereitgestellt werden.

2. Batterie nach Anspruch 1, **dadurch gekennzeichnet, dass** das Lithiumsalz L₁ aus dem Lithiumfluorat (LiFO₃), dem Lithium-bis (trifluormethansulfonyl) imid (LiTFSI), dem Lithiumhexafluorphosphat (LiPF₆), dem Lithiumfluorborat (LiBF₄), dem Lithiummetaborat (LiBC), dem Lithiumperchlorat (LiClO₄), dem Lithiumnitrat (LiN03), dem Lithium-bis (fluorsulfonyl) imid (LiFSI), dem Lithium-bis(oxalat)borat (LiB(C₂O₄)₂ oder LiBOB) und deren Gemischen ausgewählt ist.

3. Batterie nach einem der vorangehenden Ansprüche, **dadurch gekennzeichnet, dass** die positive Elektrode mindestens 50 Ma% organische Redoxstruktur in Bezug auf die Gesamtmasse der positiven Elektrode umfasst.

4. Batterie nach einem der vorangehenden Ansprüche, **dadurch gekennzeichnet, dass** die positive Elektrode 1 bis 30 Ma% Mittel umfasst, das eine elektronische Leitfähigkeit erzeugt, in Bezug auf die Gesamtmasse der positiven Elektrode.

5. Batterie nach einem der vorangehenden Ansprüche, **dadurch gekennzeichnet, dass** das Mittel, das eine elektronische Leitfähigkeit erzeugt, aus dem Carbonschwarz, dem Carbon SP, dem Acetylenschwarz, den Carbonfasern und -nanofasern, den Carbon-Nanoröhrchen, dem Graphen, dem Graphit, den Metallpartikeln und -fasern und einem von deren Gemischen ausgewählt ist.

6. Batterie nach einem der vorangehenden Ansprüche, **dadurch gekennzeichnet, dass** die positive Elektrode 2 bis 30 Ma% Polymerbindemittel P₁ in Bezug auf die Gesamtmasse der positiven Elektrode umfasst.

7. Batterie nach einem der vorangehenden Ansprüche, **dadurch gekennzeichnet, dass** das Polymerbindemittel P₁ aus den Ethylen-Copolymeren und -Homopolymeren; den Propylen-Copolymeren und -Homopolymeren; den Ethylenoxid-, Methylenoxid-, Propylenoxid-, Epichlorhydrin-, Allylglycidylether-Homopolymeren und -Copolymeren und deren Gemischen; den halogenierten Polymeren; den Polyacrylaten; den Polyalkoholen; den elektronisch leitenden Polymeren; den Polymeren vom Typ kationisch und einem von deren Gemischen ausgewählt ist.

8. Batterie nach einem der vorangehenden Ansprüche, **dadurch gekennzeichnet, dass** das Polymerbindemittel P₂ aus den Polyolefinen, den Polymeren, umfassend mehrere Ethereinheiten, den halogenierten Polymeren, den nicht elektronisch leitenden Polymeren vom Typ anionisch, den Polyacrylaten, den Elastomeren und einem von deren Gemischen ausgewählt ist.

9. Batterie nach einem der vorangehenden Ansprüche, **dadurch gekennzeichnet, dass** der gelierte Polymerelektrolyt 40 bis 80 Ma% Polymerbindemittel P₂ in Bezug auf die Gesamtmasse des gelierten Polymerelektrolyten umfasst.

10. Batterie nach einem der vorangehenden Ansprüche, **dadurch gekennzeichnet, dass** das Polymerbindemittel P₂ ein Gemisch eines Polymers P_{2-A} und eines Polymers P_{2-B} ist, wobei das Polymer P_{2-A} erlaubt, das in hoher Konzentration in dem gelierten Polymerelektrolyten vorhandene Lithiumsalz L₁ zu solubilisieren und das Polymer P_{2-B} erlaubt, den mechanischen Halt des gelierten Polymerelektrolyten zu gewährleisten.

11. Batterie nach Anspruch 10, **dadurch gekennzeichnet, dass** das Polymer P_{2-A} ein Polymer ist, das mehrere Ethereinheiten umfasst, und das Polymer P_{2-B} ein halogeniertes Polymer ist.

12. Batterie nach einem der vorangehenden Ansprüche, **dadurch gekennzeichnet, dass** das Verhältnis O/Li des gelierten Polymerelektrolyten 3 bis 10 beträgt.

13. Batterie nach einem der vorangehenden Ansprüche, **dadurch gekennzeichnet, dass** der gelierte Polymerelektrolyt 1 bis 35 Ma% flüssigen linearen oder cyclischen Polyether in Bezug auf die Gesamtmasse des gelierten Polymerelektrolyten umfasst.

14. Batterie nach einem der Ansprüche 1 bis 7, **dadurch gekennzeichnet, dass** die Konzentration des Lithiumsalzes L₁ in dem flüssigen Elektrolyten 1,8 bis 6 mol/l beträgt.

15. Verfahren zur Herstellung einer organischen Lithiumbatterie nach einem der Ansprüche 1 bis 14, **dadurch gekennzeichnet, dass** es die folgenden Schritte umfasst:
A) einen Herstellungsschritt eines flüssigen Elektrolyten oder eines gelierten Polymerelektrolyten nach einem der Ansprüche 1 bis 14,
wobei das Verfahren ferner die eine oder andere der folgenden Sequenzen B1 oder B2 umfasst:
B1) einen Verbindungsschritt einer positiven Elektrode, einer negativen Elektrode nach einem der Ansprüche 1 bis 14, und eines gelierten Polymerelektrolyten, hergestellt in Schritt A), oder
B2-i) einen Verbindungsschritt einer positiven Elektrode, einer negativen Elektrode und eines porösen Separators nach einem der Ansprüche 1 bis 14, und
B2-ii) einen Imprägnierschritt der in Schritt B2-i) erhaltenen Verbindung mit dem in Schritt A) hergestellten flüssigen Elektrolyten.

## Claims

1. Organic lithium battery comprising:
- a negative electrode comprising lithium metal or an alloy of lithium metal,
- a positive electrode optionally supported by a current collector, said positive electrode comprising at least one redox organic structure comprising at least two carbonyl C=O functional groups, two thione C=S functional groups or two imine C=N functional groups, at least one polymer binder P₁ and at least one agent generating electron conductivity, said redox organic structure being different from the sulphur-comprising agents chosen from elemental sulphur S₈ and sulphur-comprising organic compounds comprising at least one S-S bond,
said organic lithium battery being **characterized in that** it additionally comprises an electrolyte comprising at least one lithium salt L₁ and at least one liquid linear or cyclic polyether with a molar mass of less than or equal to 10 000 g·mol⁻¹, it being understood that:
* when the electrolyte is a liquid electrolyte, the concentration of lithium salt L₁ in said liquid electrolyte is at least 1.6 mol/l, and the liquid electrolyte impregnates a porous separator, and
* when the electrolyte is a gelled polymer electrolyte, it additionally comprises at least one polymer binder P₂ which is soluble in the liquid linear or cyclic polyether with a molar mass of less than or equal to 10 000 g·mol⁻¹, and the concentration of lithium salt L₁ in said gelled polymer electrolyte is such that the O/Li ratio is at most 15, it being understood that, in the O/Li ratio, "O" denotes the number of oxygen atoms provided by the ether units of the liquid linear or cyclic polyether with a molar mass of less than or equal to 10 000 g·mol⁻¹, and optionally by the ether units of the polymer binder P₂, if it contains them, and "Li" denotes the number of lithium ions provided by the lithium salt L₁.

2. Battery according to Claim 1, **characterized in that** the lithium salt L₁ is chosen from lithium fluorate (LiFO₃), lithium bis(trifluoromethanesulphonyl)imide (LiTFSI), lithium hexafluorophosphate (LiPF₆), lithium fluoroborate (LiBF₄), lithium metaborate (LiBO₂), lithium perchlorate (LiClO₄), lithium nitrate (LiNO₃), lithium bis(fluorosulphonyl)imide (LiFSI), lithium bis(oxalato)borate (LiB(C₂O₄)₂ or LiBOB) and their mixtures.

3. Battery according to either one of the preceding claims, **characterized in that** the positive electrode comprises at least 50% by weight of redox organic structure, with respect to the total weight of said positive electrode.

4. Battery according to any one of the preceding claims, **characterized in that** the positive electrode comprises from 1 to 30% by weight of agent generating an electron conductivity, with respect to the total weight of the positive electrode.

5. Battery according to any one of the preceding claims, **characterized in that** the agent generating an electron conductivity is chosen from carbon black, sp carbon, acetylene black, carbon fibres and nanofibres, carbon nanotubes, graphene, graphite, metal particles and fibres, and one of their mixtures.

6. Battery according to any one of the preceding claims, **characterized in that** the positive electrode comprises from 2 to 30% by weight of polymer binder P₁, with respect to the total weight of the positive electrode.

7. Battery according to any one of the preceding claims, **characterized in that** the polymer binder P₁ is chosen from copolymers and homopolymers of ethylene; copolymers and homopolymers of propylene; homopolymers and copolymers of ethylene oxide, of methylene oxide, of propylene oxide, of epichlorohydrin or of allyl glycidyl ether, and their mixtures; halogenated polymers; polyacrylates; polyalcohols; electron-conducting polymers; polymers of cationic type; and one of their mixtures.

8. Battery according to any one of the preceding claims, **characterized in that** the polymer binder P₂ is chosen from polyolefins, polymers comprising several ether units, halogenated polymers, non-electron-conducting polymers of anionic type, polyacrylates, elastomers and one of their mixtures.

9. Battery according to any one of the preceding claims, **characterized in that** the gelled polymer electrolyte comprises from 40 to 80% by weight of polymer binder P₂, with respect to the total weight of the gelled polymer electrolyte.

10. Battery according to any one of the preceding claims, **characterized in that** the polymer binder P₂ is a mixture of a polymer P_{2-A} and of a polymer P_{2-B}, said polymer P_{2-A} making it possible to dissolve the lithium salt L₁ present in a high concentration in the gelled polymer electrolyte and said polymer P_{2-B} making it possible to provide the mechanical strength of said gelled polymer electrolyte.

11. Battery according to Claim 10, **characterized in that** the polymer P_{2-A} is a polymer comprising several ether units and the polymer P_{2-B} is a halogenated polym er.

12. Battery according to any one of the preceding claims, **characterized in that** the O/Li ratio of the gelled polymer electrolyte ranges from 3 to 10.

13. Battery according to any one of the preceding claims, **characterized in that** the gelled polymer electrolyte comprises from 1 to 35% by weight of liquid linear or cyclic polyether, with respect to the total weight of the gelled polymer electrolyte.

14. Battery according to any one of Claims 1 to 7, **characterized in that** the concentration of the lithium salt L₁ in the liquid electrolyte ranges from 1.8 to 6 mol/l.

15. Process for the manufacture of an organic lithium battery as defined in any one of Claims 1 to 14, **characterized in that** it comprises the following stages:
A) a stage of preparation of a liquid electrolyte or of a gelled polymer electrolyte as defined in any one of Claims 1 to 14,
said process additionally comprising one or other of the following sequences B1 or B2:
B1) a stage of assembling a positive electrode, a negative electrode, as are defined in any one of Claims 1 to 14, and a gelled polymer electrolyte prepared in stage A), or
B2-i) a stage of assembling a positive electrode, a negative electrode and a porous separator, as are defined in any one of Claims 1 to 14, and
B2-ii) a stage of impregnation of the assembly as obtained in stage B2-i) by the liquid electrolyte prepared in stage A).
